# EUROPEAN PATENT APPLICATION

(11) **EP 3 629 445 A1**
(43) Date of publication of application: **01.04.2020**
(21) Application number: 18197169.8
(22) Date of filing: 27.09.2018
(51) Int. Cl.: H02K 1/14, H02K 3/18, H02K 15/04

(54) **A STATOR AND A METHOD FOR ASSEMBLING A STATOR**

(71) Applicant: Rolls-Royce Deutschland Ltd & Co KG, 15827 Blankenfelde-Mahlow (DE)
(72) Inventor: Balazs, Gergely György, 1034 Budapest (HU); Dorogi, Janos, 2314 Halásztelek (HU); Nadudvari, Zoltan, 3261 Pálosvörösmart (HU); Kutrovich, Daniel, 2013 Pomáz (HU)

(57) **Abstract**

Stator (100) for a permanent magnet synchronous motor, comprising a multiplicity of stator teeth, wherein each stator tooth (110-113) of the multiplicity of stator teeth has a tooth axis, and a stator ring (101) with a stator axis, wherein the multiplicity of stator teeth is arranged radially along the circumference of the stator ring (101), and the tooth axes cross the stator axis (102) orthogonally within one plane, and a multiplicity of stator coils, wherein each stator coil (120-123) of the multiplicity of stator coils has a coil axis and a coil opening and comprises windings made of a wire, which windings extend along the coil axis, and the coil axis of the respective stator coil (120-123) is arranged parallel to the tooth axis of the respective stator tooth (110-113) and the coil opening of the respective stator coil (120-123) surrounds the respective stator tooth (110-113), wherein the wire of the respective coil (120-123) has a rectangular cross section with a shorter side and a longer side and the shorter side of the wire of the respective coil (120-123) is orientated parallel to the coil axis of the respective stator coil (120-123).

## Description

The invention relates to a stator for a permanent magnet synchronous motor, comprising a multiplicity of stator teeth, wherein each stator tooth of the multiplicity of stator teeth has a tooth axis and a stator ring, with a stator axis, wherein the multiplicity of stator teeth is arranged radially along the circumference of the stator ring, and the tooth axes cross the stator axis orthogonally within one plane, and a multiplicity of stator coils, wherein each stator coil of the multiplicity of stator coils has a coil axis and a coil opening and comprises windings made of a wire, which windings extend along the coil axis, and the coil axis of the respective stator coil is arranged parallel to the tooth axis of the respective stator tooth and the coil opening of the respective stator coil surrounds the respective stator tooth.

Moreover, the invention relates to a method for assembling a stator for a permanent magnet synchronous motor.

Prior art stators for permanent magnet synchronous machines often have stator coils, which are machined, i.e. winded directly around single-part stator teeth, which are subsequently assembled radially around a stator axis to achieve a final stator configuration. This procedure allows usually a flexible and simple design of the coils.

However, such stators often have limited fill factors at the stator coil or a low heat transfer between the individual turns of the windings of the stator coil or to the stator coil itself. Hence, the mechanical and electrical performance of the prior art synchronous machines is limited disadvantageously, especially at high operating frequencies.

The invention has its object to provide an improved stator and a method for producing an improved stator to overcome the disadvantages of prior art stators and subsequently to allow a performance improvement of the stator.

This object is achieved according to a first aspect of the invention with a stator of the aforesaid type, wherein the wire of the respective coil has a rectangular cross section with a shorter side and a longer side, and the shorter side of the wire of the respective coil is orientated parallel to the coil axis of the respective stator coil. The longer side has a larger dimension than the shorter side.

In this matter, using a rectangular profile wire for a stator coil leads into a higher slot fill factor. Consequently, the heat transfer between the individual turns of the windings or to the respective stator tooth can be improved. However, in case of high operating frequency the resistance can be increased due to the skin effect. According to the invention, the resistance increment can be reduced by winding the rectangular wires in such a way, that the shorter side of the wire is parallel with the tooth axis.

Thus, the losses of the resulting magnets can be lower and a permanent magnet synchronous machine can have a higher torque and a higher power density.

The solution according to the invention provides a simple winding procedure, because the teeth can be wound one-by-one before the assembly of the complete stator unit. Preferably the wire of the stator coil has a cross section, which is large enough that the manufactured coil is mechanically stable enough for a further handling without a specific wire carrier for the wound stator coil at the subsequent assembly of a stator tooth and a stator coil. This mentioned stability can be achieved, if the cross section of the wire is more than 0.5 mm², preferably more than 1 mm² and more preferably more than 1.5 mm². This aspect supports stator configurations for high current applications for high torque machines and/or machines at high operating frequencies.

Moreover, it is beneficial, if the respective stator tooth has a tooth width, which is defined by the dimension of the cross section in the direction orthogonal to the tooth axis and in a plane orthogonal to the stator axis, and the longer side of the wire is slightly smaller than the half of the tooth width. In particular, the respective cross section of the stator tooth is defined within the portion of the stator tooth, where the stator coil is to be mounted. This leads to a small bending radius of the wire at the windings, which enclose the respective stator tooth and simplifies herewith the production of the stator coil.

Consequently, enameled wires cannot be used in some cases as the small bending radius can damage the insulation of the wires. Therefore, it is advantageously if the turns of the windings are insulated from each other after the winding procedure, for instance by spraying up or immersion of an enamel finish.

In an additional aspect of the invention, the stator ring comprises an outer side, directed radially outwards, on which the multiplicity of stator teeth is arranged. This enables a simple construction of a first preferred stator type, especially in combination with the aforesaid features.

It is further beneficial in this aspect, if the stator further comprises a multiplicity of yoke segments, wherein each yoke segment of the multiplicity of yoke segments is configured to be mounted between two respective adjacent stator teeth to connect the two respective adjacent stator teeth. This aspect leads to a closed slot stator configuration, which provides higher electrical performance versus an open slot stator, which has mostly a higher flux leakage and therefore reduces the overall efficiency of the electrical machine.

It is beneficial for a simpler manufacturing of parts of the stator if the multiplicity of stator teeth and the stator ring constitute a one-piece part. The separate manufacturing of the stator teeth and the stator coils allows a very simple production of the stator coil as well as a simple assembly of the stator.

It is preferred for an improved assembly of the stator, if the multiplicity of yoke segments and the multiplicity of stator teeth constitute the stator ring. A mounting means for holding the aforesaid parts together, e.g. an additional ring, is not shown in the figures.

In a further additional aspect of the invention, the stator ring comprises an inner side, directed radially inwards, on which the multiplicity of stator teeth is arranged. This enables a simple construction of a second preferred stator type, especially in combination with the aforesaid features.

It is beneficial, if the stator ring comprises a multiplicity of notches, each notch of the multiplicity of notches is configured to receive a mounting portion of the respective stator tooth. This aspect leads to a simple way of assembling removeable stator parts.

Here, it is beneficial, if each notch has a longitudinal elongation, which is orientated parallel to the stator axis and has laterally, i.e. perpendicularly to the stator axis a v-shaped opening, which is configured to receive a complementary shaped mounting portion of the respective stator tooth. The shape enables an easy assembling process; thus, a v-shape is preferred since a slip-in movement of the stator tooth into a respective notch at the stator ring supports the aimed easy assembling process and allows higher tolerances for the opening and the complementary shaped mounting portion as well as a simple and reliable final, but optionally releasable fixation of both parts.

It has advantages, if the stator according to the invention is arranged within a permanent magnet synchronous motor.

Moreover, it has advantages, if the stator according to the invention is arranged within or as an electric propulsion system of an aircraft, which preferably requires stator configurations for high current applications for high torque machines and/or machines at high operating frequencies and an overall light weight of the motor.

The problem is also solved by a method for assembling a stator with the steps of:
a) Providing a stator, comprising following parts:
   a multiplicity of stator teeth, wherein each stator tooth of the multiplicity of stator teeth has a tooth axis, and
   a stator ring with a stator axis, wherein the multiplicity of stator teeth is arranged radially along the circumference of the stator ring, and the tooth axes cross the stator axis orthogonally within one plane, and
b) Providing a multiplicity of stator coils separately from the multiplicity of stator teeth,
   wherein each stator coil of the multiplicity of stator coils has a coil axis and a coil opening and comprises windings made of a wire, which windings extend along the coil axis,
   and the wire of the respective coil has a rectangular cross section with a shorter side and a longer side, and the shorter side of the wire of the respective coil is orientated parallel to the coil axis of the respective stator coil
c) Placing each stator coil on the respective stator tooth, wherein the coil axis of the respective stator coil is arranged parallel to the tooth axis of the respective stator tooth and the coil opening of the respective stator coil surrounds the respective stator tooth.
d) Assembling the multiplicity of stator teeth, each carrying a respective stator coil, together with the stator ring, if applicable.

For performing the method the sequence of the steps a), b), c) and d) is preferred. For example, the steps a) and b) or steps c) and d) can also being swapped, if the respective stator configuration allows it.

Step d) is only applicable, if the stator ring and the stator teeth are manufactured as separate components, which need to be assembled together. However, in the case that the stator ring and the stator teeth are a one-piece part, step d) is obsolete.

Each stator tooth has a first end and a second end. In an assembled configuration of a stator tooth with the stator ring, the first end is joined with the stator ring and the second end is facing radially orientated opposite to the first end. With other words, the first end and the second end are oriented along the respective stator tooth axis.

With an improvement of the method, an insulation layer is provided at least partially on the surface the wire of the respective coil between step b) and c).

The method allows the use of pre-wound windings as stator coils, which leads to a simpler winding procedure of the stator coils since the coils can be wound separate from the stator tooth. In addition, the assembly of the stator is much simpler compared to prior art since pre-processed parts just need to be put together.

As mention before, it is beneficial if the longer side of the wire is slightly smaller than the half of the stator tooth width, since it leads to a small bending radius of the wire at the windings, which enclose the respective stator tooth. However, enameled wires cannot be used as the small bending radius can damage the insulation of the wires. Therefore, after the winding procedure the turns of the windings can be insulated from each other by the insulation layer, and subsequently the windings can be placed on to the teeth.

In a first further development, the multiplicity of stator teeth preferably constitutes one piece together with the stator ring.

For the matter of the first further development, the method comprises subsequently to the steps a), b), c) and d) further steps of:
e1) Providing a multiplicity of yoke segments, wherein each yoke segment of the multiplicity of yoke segments is configured to be mounted between two respective adjacent stator teeth to connect the two respective adjacent stator teeth,
f1) Mounting the yoke segments between two respective adjacent stator teeth.

For performing the method of the first further development the sequence of the steps a), b), c), d), e1) and f1) is preferred. For example, the steps a) and b) or steps c) and d) can also being swapped.

Here, it is beneficial, if the stator ring comprises an outer side, directed radially outwards, on which the multiplicity of stator teeth is arranged. This enables a simple construction of a first preferred stator type, especially in combination with the aforesaid features.

In this context the second end of the respective stator tooth is facing radially outwards. Preferably, the yoke segments connect the respective second ends of adjacent stator teeth.

In a second, alternative further development, the stator ring comprises a multiplicity of notches each configured to receive a respective stator tooth and preferably each of the multiplicity of notches has a longitudinal elongation, which is orientated parallel to the stator axis and has laterally a v-shaped opening, which is configured to receive a complementary shaped mounting portion of the respective stator tooth.

For the matter of the second further development, after step d) of the method comprises further the step of:
e2) Slide the stator tooth with the stator coil into the notches.

For performing the method of the second further development the sequence of the steps a), b), c) and d) is preferred, wherein step e2) is a succeeding part of step d). For example, the steps a) and b) or steps c) and d) can also being swapped.

Here it is also beneficial, if the stator ring comprises an inner side, directed radially inwards, on which the multiplicity of stator teeth is arranged. This enables a simple construction of a second preferred stator type, especially in combination with the aforesaid features.

The invention shall now be explained based on preferred exemplary embodiments thereof with reference to the accompanying drawings in more detail below. The figures show in:
Fig. 1 a perspective view of a stator coil,
Fig. 2a a side view of a stator according a first embodiment of the invention with a cutting plane A-A,
Fig. 2b a front view of the stator in the cutting plane A-A of Fig 2a,
Fig. 2c a perspective view of the stator of Fig. 2a,
Fig. 3a a side view of a stator according a second embodiment of the invention with a cutting plane B-B,
Fig. 3b a front view of the stator in the cutting plane B-B of Fig 3a,
Fig. 4 a perspective view of a yoke segment of the stator of Fig. 2a,
Fig. 5 a perspective view of stator parts of the stator of Fig. 2a,
Fig. 6a a side view of a stator according a third embodiment of the invention with a cutting plane C-C,
Fig. 6b a front view of the stator in the cutting plane C-C of Fig 6a,
Fig. 6c a perspective view of the stator of Fig. 6a,
Fig. 7 a perspective view of a stator tooth of the stator of Fig. 6a,
Fig. 8 a perspective view of a stator ring of the stator of Fig. 6a.

It is clear, that further not shown parts are necessary for the assembly and operation of a stator within an electrical drive, e.g. mounting parts, an electrical connection to a power supply and electronic control components. For the sake of better understanding these parts are not illustrated and explained in the following description.

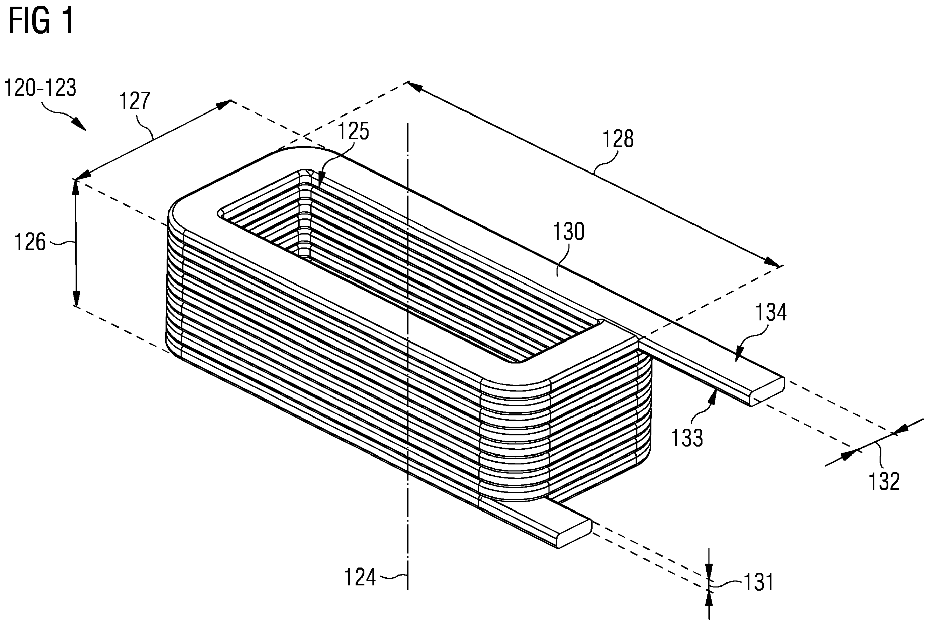

Fig. 1 shows a stator coil 120-123 for three embodiments of stators 100, 200 and 300 according to the invention, which stator coil 120-123 has a coil axis 124 and a coil opening 125.

The stator coil 120-123 comprises windings made of a wire 130. The windings extend along the coil axis 124.

The coil axis 124 of the respective stator coil 120-123 is designed to be arranged parallel to a tooth axis of a stator tooth and the coil opening 125 is designed to surround a stator tooth.

The illustrated stator coil 120-123 illustrates the principle of the arrangement. The windings are shown only for a basic understanding and may have some inaccuracies in the representation. Moreover, the winding can have other configurations of the input and output ports as shown.

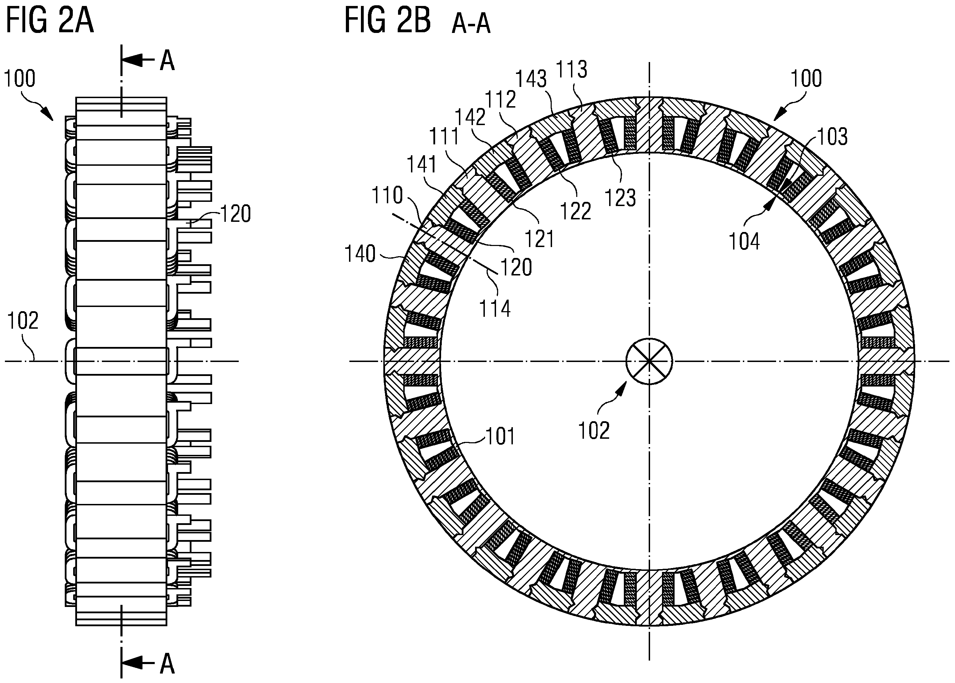

Fig. 2a to 2c show a first embodiment of a stator 100 according to the invention for a permanent magnet synchronous motor. A rotor with permanent magnets for a motor is not shown. The stator is designed to receive a permanent magnet rotor.

The stator 100 comprises a multiplicity of stator teeth, wherein each stator tooth 110-113 of the multiplicity of stator teeth has a tooth axis 114.

The stator 100 further comprises a stator ring 101 with a stator axis 102, which is the rotational axis of a final motor assembly, and wherein the multiplicity of stator teeth is arranged radially along the circumference of the stator ring 101. The tooth axes 114 cross the stator axis 102 orthogonally within one plane.

Moreover, the stator 100 comprises a multiplicity of stator coils, wherein each stator coil 120-123 of the multiplicity of stator coils has a coil axis 124 and a coil opening 125. Each stator coil 120-123 comprises windings made of a wire 130, which windings extend along the coil axis 124.

Each stator tooth 110-113 has a first end and a second end.

The coil axis 124 of the respective stator coil 120-123 is arranged parallel to the tooth axis 114 of the respective stator tooth 110-113.

Basically, for other not shown specific embodiments, the tooth axis can also have an angle with respect to the coil axis, but preferably below 10°, and more preferably below 5°.

In the shown embodiment, the stator tooth 110-113 has a portion of the tooth body, which is designed to be inserted into the coil opening.

The stator tooth 110-113 has a body with an essentially rectangular shape in its cross section, and the tooth axis 114 is in its center.

In general, the tooth axis can also go through any other portion of the tooth, which is not shown in the embodiments. The same applies to the stator coil, i.e. the coil opening.

The coil opening 125 of the respective stator coil 120-123 surrounds the respective stator tooth 110-113.

The wire 130 of the respective coil 120-123 has a rectangular cross section with a shorter side 133 and a longer side 134, and the shorter side 133 of the wire 130 of the respective coil 120-123 is orientated parallel to the coil axis 124 of the respective stator coil 120-123.

It is clear, if the wire 130 has an essentially rectangular cross section, it means in practice the edges of the wire have a small radius due to manufacturing issues. Of course, the wire 130 has an insulating coating for electrically separating the respective windings from each other. This aspect is not shown in the figures.

The stator ring 101 comprises an outer side 103, directed radially outwards, on which the multiplicity of stator teeth is arranged.

The stator 100 comprises a multiplicity of yoke segments, wherein each yoke segment 140-143 of the multiplicity of yoke segments is configured to be mounted between two respective adjacent stator teeth 110-113 for connecting the two respective adjacent stator teeth 110-113.

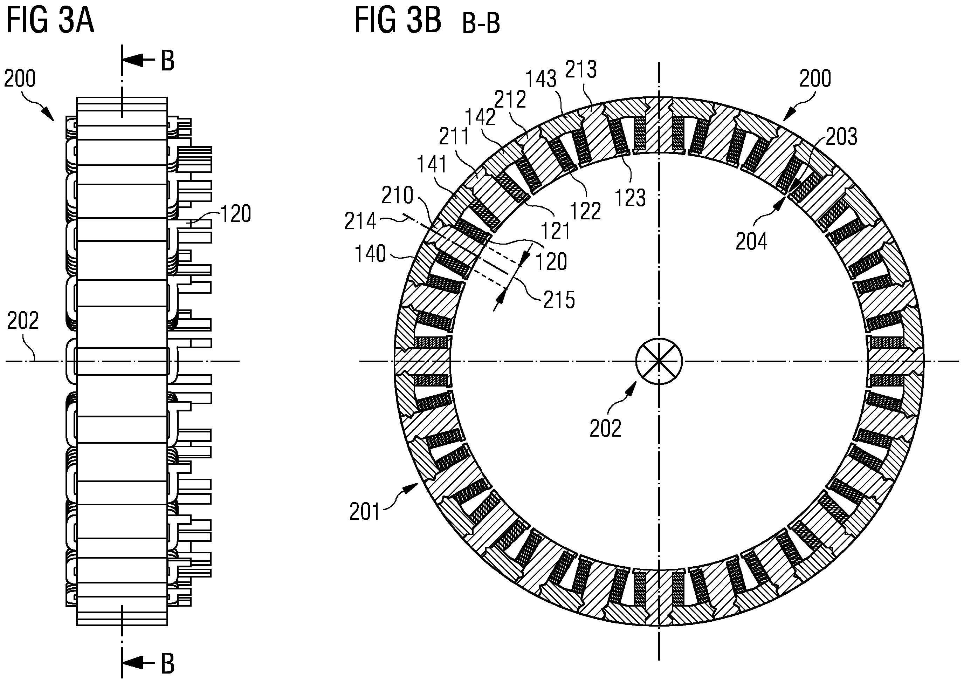

Fig. 3a and 3b show a second embodiment of a stator 200 according to the invention, which is designed to receive a complementary permanent magnet rotor.

The stator 200 comprises a multiplicity of stator teeth, wherein each stator tooth 210-213 of the multiplicity of stator teeth has a tooth axis 214.

The stator 200 further comprises a stator ring 201 with a stator axis 202, which is the rotational axis of a final motor assembly, and wherein the multiplicity of stator teeth is arranged radially along the circumference of the stator ring 201. The tooth axes 214 cross the stator axis 202 orthogonally within one plane.

The multiplicity of yoke segments and the multiplicity of stator teeth constitute together the stator ring 201. A mounting means for holding the aforesaid parts together, e.g. an additional ring, is not shown.

Moreover, the stator 200 comprises a multiplicity of stator coils, wherein each stator coil 120-123 of the multiplicity of stator coils has a coil axis 124 and a coil opening 125, as shown in Fig. 1, wherein the related description of a stator coil 120-123 also applies.

Each stator tooth 210-213 has a first end and a second end, which are opposite to each other regarding the tooth axis 214. The first end of a stator tooth 210-213 is oriented inwards the assembled stator 200 and comprises a stator head, which has a widening of the cross section 215 of the stator tooth 210-213 for fixing a stator coil 120-123 during assembly. The second end of the stator tooth 210-213 has a mounting portion, e.g. a pair of notches, which hare configured to receive corresponding counterparts mounted on yoke segments. The portions of the pair of notches and the corresponding yoke segments can be assembled and fixed together e.g. by glue or screws in combination with an additional ring structure as a mounting means.

The coil axis 124 of the respective stator coil 120-123 is arranged parallel to the tooth axis 114 of the respective stator tooth 210-213.

The stator tooth 210-213 has a body with an essentially rectangular shape in its cross section, and the tooth axis 114 is in its center.

The coil opening 125 of the respective stator coil 120-123 surrounds the respective stator tooth 210-213.

The stator ring 201 comprises an outer side 203, directed radially outwards, on which the multiplicity of stator teeth is arranged.

The stator 200 comprises a multiplicity of yoke segments, wherein each yoke segment 140-143 of the multiplicity of yoke segments is configured to be mounted between two respective adjacent stator teeth 210-213 for connecting the two respective adjacent stator teeth 210-213.

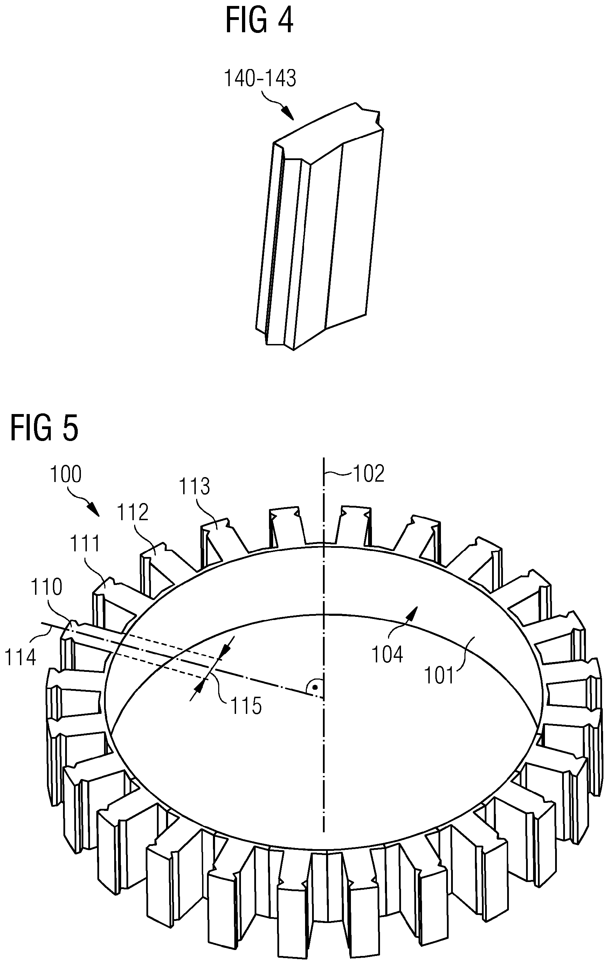

Fig. 4 illustrates a single yoke segment 140-143. Each yoke segment 140-143 connects, optionally removeable, adjacent teeth at the second end of the respective tooth. The stator tooth has a complementary shaped reception for receiving the yoke segment 140-143 by sliding the yoke segment 140-143 into adjacent teeth with a movement parallel to the stator axis 102. A final fixation between the yoke segment 140-143 and the adjacent teeth can be achieved for instance by screws or glue. This aspect is not shown.

At the assembled configuration each coil is located between the first end and the second end of the respective tooth, wherein the respective tooth is inserted into the coil opening of the respective coil.

Moreover, in this embodiment the multiplicity of stator teeth constitutes a one-piece part together with the stator ring 101, which is depicted in Fig. 5.

The stator tooth 110 has a tooth width 115, which is which is defined by the dimension of the cross section in the direction orthogonal to the tooth axis 114 and in a plane orthogonal to the stator axis 102, and the longer side 134 of the wire 130 is smaller than the half of the tooth width 115.

In this embodiment each stator tooth 110-113 is joined with the stator ring 101 at the first end. Some embodiments can foresee separate respective parts, which are joinable.

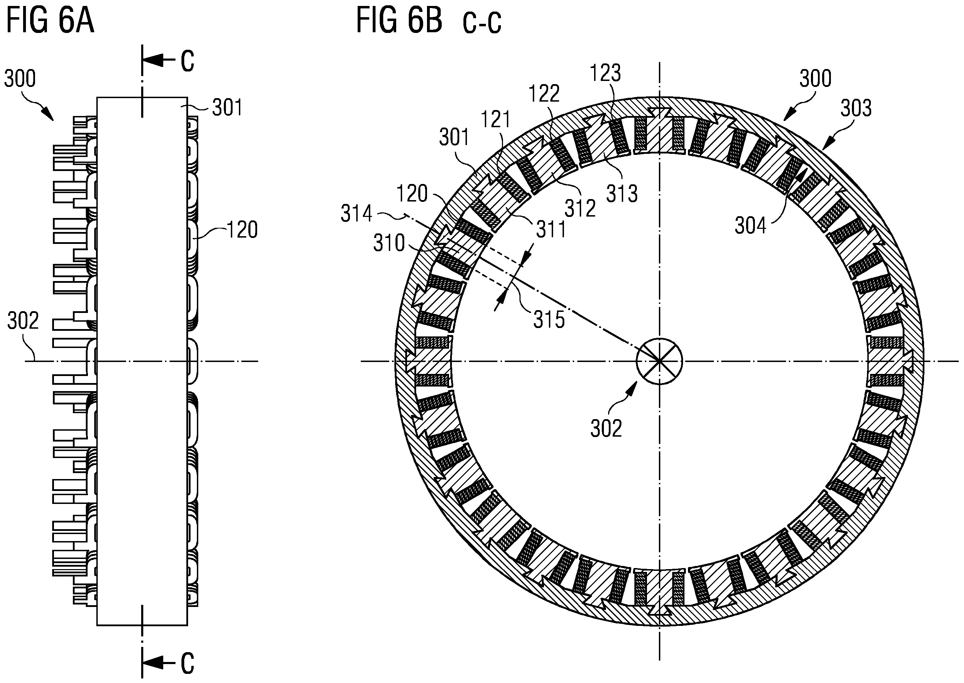

Fig. 6a to 6c, Fig. 7 and Fig. 8 show a third embodiment with a stator 300 according to the invention for a permanent magnet synchronous motor.

The stator 300 comprises a multiplicity of stator teeth, wherein each stator tooth 310-313 of the multiplicity of stator teeth has a tooth axis 314.

The stator 300 further comprises a stator ring 301 with a stator axis 302, wherein the multiplicity of stator teeth is arranged radially along the circumference of the stator ring 301. The tooth axes 314 cross the stator axis 202 orthogonally within one plane.

The stator tooth 310 has a tooth width 315, which is which is defined by the dimension of the cross section in the direction orthogonal to the tooth axis 314 and in a plane orthogonal to the stator axis 302, and the longer side 334 of the wire 330 is smaller than the half of the tooth width 315.

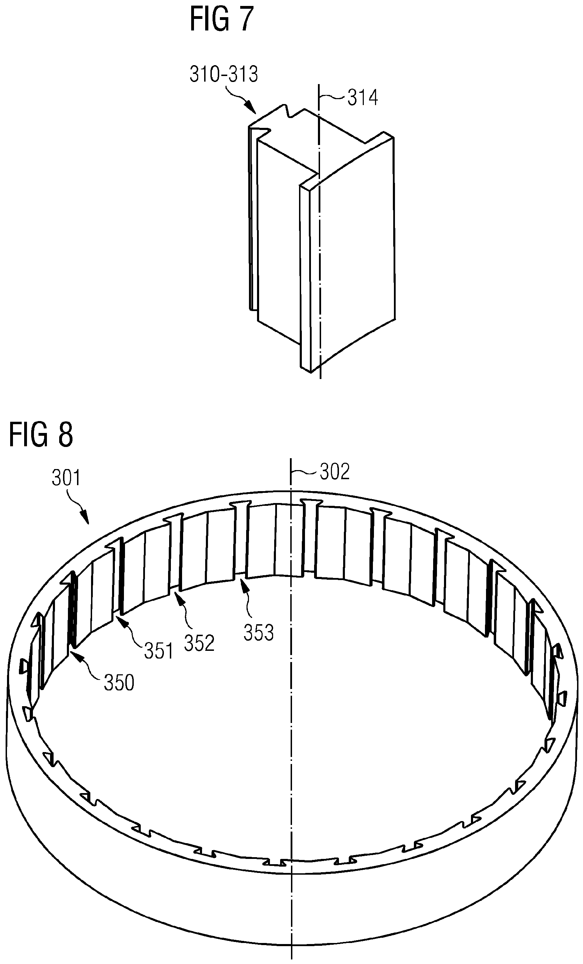

The stator tooth 310-313 is separately shown in Fig. 7 and the stator ring 301 is separately depicted in Fig. 8.

Moreover, the stator 300 comprises a multiplicity of stator coils according to the coil shown in Fig. 1, wherein each stator coil 120-123 of the multiplicity of stator coils has a coil axis 124 and a coil opening 125. Each stator coil 120-123 comprises windings made of a wire 130, which windings extend along the coil axis 124.

The coil axis 124 of the respective stator coil 120-123 is arranged parallel to the tooth axis 114 of the respective stator tooth 110-113.

The coil opening 125 of the respective stator coil 120-123 surrounds the respective stator tooth 310-313.

The wire 130 of the respective coil 120-123 has a rectangular cross section with a shorter side 133 and a longer side 134, and the shorter side 133 of the wire 130 of the respective coil 120-123 is orientated parallel to the coil axis 124 of the respective stator coil 120-123.

The stator ring 301 comprises an inner side 304, directed radially inwards, on which the multiplicity of stator teeth is arranged.

The stator 301 comprises a multiplicity of notches, wherein each notch 350-353 of the multiplicity of notches is configured to receive a mounting portion of the respective stator tooth 310-313.

Each notch 350-353 has a longitudinal elongation, which is orientated parallel to the stator axis 302, and has laterally a v-shaped opening, which is configured to receive a complementary shaped mounting portion of the respective stator tooth 310-313.

The stators 100, 200, 300 according to the invention is well suited for a permanent magnet synchronous motor.

It is advantageous if the stator 100, 200, 300 is used for a permanent magnet synchronous motor, preferably within or as an electric propulsion system of an aircraft.

The invention relates further to a method for assembling the aforesaid stator 100, 200, 300 for a permanent magnet synchronous motor. The steps of the method are not shown in the figures, since they are clear to the skilled person.

An embodiment of the assembly method according to the invention comprises the steps of:
a) Providing a stator 100, 200, 300, comprising
   a multiplicity of stator teeth, wherein each stator tooth 110-113, 210-213, 310-313 of the multiplicity of stator teeth has a tooth axis 114, 214, 314, and
   a stator ring 101, 201, 301 with a stator axis 102, 202, 302, wherein the multiplicity of stator teeth is arranged radially along the circumference of the stator ring 101, 201, 301, and the tooth axes 114, 214, 314 cross the stator axis 102, 202, 302 orthogonally within one plane,
b) Providing a multiplicity of stator coils separately from the multiplicity of stator teeth,
   wherein each stator coil 120-123 of the multiplicity of stator coils has a coil axis 124 and a coil opening 125 and comprises windings made of a wire 130, which windings extend along the coil axis 124,
   and the wire 130 of the respective coil 120-123 has a rectangular cross section with a shorter side 133 and a longer side 134, and the shorter side 133 of the wire 130 of the respective coil 120-123 is orientated parallel to the coil axis 124 of the respective stator coil 120-123, and
   Providing an insulation layer at least partially on the surface the wire 130 of the respective coil 120-123,
c) Placing each stator coil on the respective stator tooth 110-113, wherein the coil axis 124 of the respective stator coil 120-123 is arranged parallel to the tooth axis 114, 214, 314 of the respective stator tooth 110-113, 210-213, 310-313 and the coil opening 125 of the respective stator coil 120-123 surrounds the respective stator tooth 110-113.
d) Assembling the multiplicity of stator teeth, each carrying a respective stator coil 120-123, together with the stator ring 101, 201, 301, if applicable.

For performing the method the sequence of the steps a), b), c) and d) is preferred. For example, the steps a) and b) or steps c) and d) can also being swapped.

Step d) is only applicable, if the stator ring 101, 201, 301 and the stator teeth 110-113, 210-213, 310-313 are manufactured as separate component, which need to be assembled together. However, in the case that the stator ring 101, 201, 301 and the stator teeth 110-113, 210-213, 310-313 are a one-piece part, step d) is obsolete.

For an embodiment of the method for a stator 100, which shows a closed stator configuration, following steps of the method are illustrated in the figures.

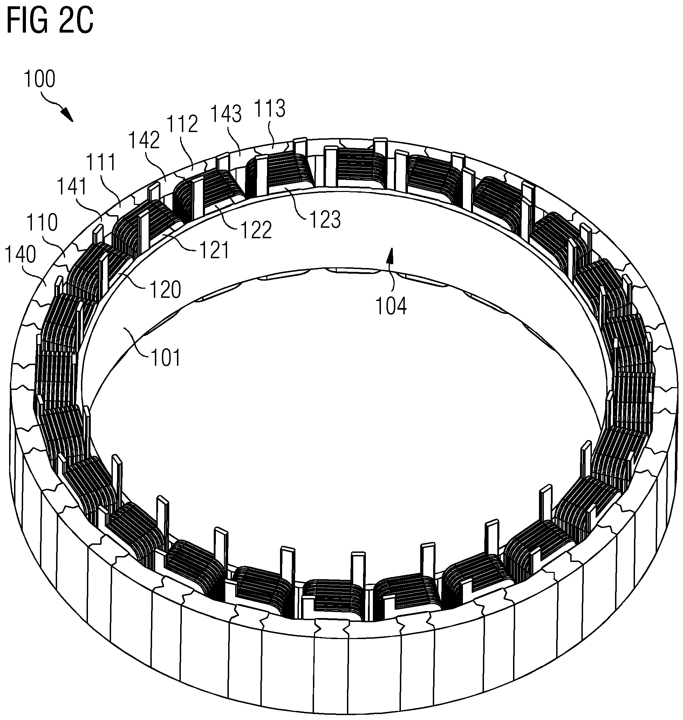

The provision of the stator teeth 110-113 and the stator ring 101 from step a) a one-piece part can be seen in Fig. 2.

The provision of one stator coil 120-123 from step b) can be seen in Fig. 1.

The application or provision of the insulating layer from step b) is not shown in the figures but can be performed for instance by spraying up or immersion of an enamel finish. Alternatively, tape-like insulating layers can be applied between the windings, for example for high current applications to provide a high insulation resistance.

Placing the stator coils 120-123 on the respective stator tooth 110-113 from step c) results in the configuration shown in Fig. 2a to 2c.

For an embodiment of the method, which shows a stator configuration with slipped teeth, following steps of the method are illustrated in the figures.

The provision of the stator teeth 310-313 and the stator ring 301 from step a) a one-piece part can be seen in Fig. 7 and Fig. 8.

The provision of one stator coil 120-123 from step b) can be seen in Fig. 1.

The provision of the insulating layer from step b) is not shown in the figures but can be performed by spraying an enamel finish.

Placing the stator coils 120-123 on the stator the respective stator tooth 310-313 from step c) results in the configuration shown in Fig. 6a to 6b.

A further embodiment of the method for assembling the aforesaid stator, as depicted in Fig. 1 and from Fig. 2a to 2c, wherein the multiplicity of stator teeth preferably constitutes one piece together with the stator ring 101.

For that matter, the method further comprises subsequently to the steps a), b), c) and d) further subsequent steps of:
e1) Providing a multiplicity of yoke segments, wherein each yoke segment 140-143 of the multiplicity of yoke segments is configured to be mounted between two respective adjacent stator teeth 110-113, 210-213 to connect the two respective adjacent stator teeth 110-113, 210-213,
f1) Mounting the yoke segments 140-143 between two respective adjacent stator teeth 110-113, 210-213.

For performing the method of the first further development the sequence of the steps a), b), c), d), e1) and f1) is preferred. For example, the steps a) and b) or steps c) and d) can also being swapped.

The yoke elements 140-143 are shown in Fig. 4, which are slipped into the corresponding openings parallel to the stator axis 102 or 202. The final assembly is illustrated within Fig. 2b, Fig 3b and Fig. 6b.

Preferably at the first and second embodiment, the stator ring 101, 201 comprises an outer side 103, 203, directed radially outwards, on which the multiplicity of stator teeth is arranged.

Another embodiment of the method for assembling the aforesaid stator 300, as depicted in Fig. 1 and from Fig. 6a to 8, wherein the stator ring 301 comprises a multiplicity of notches 350-353, each configured to receive a respective stator tooth 310-313.

Preferably, each of the multiplicity of notches 350-353 has a longitudinal elongation, which is orientated parallel to the stator axis 302, and has laterally a v-shaped opening, which is configured to receive a complementary shaped mounting portion of the respective stator tooth 310-313.

For that matter, after step d) the method comprises further the step of:
e2) Slide the stator tooth 310-313 with the stator coil into the notches 350-353.

For performing the method of the second further development the sequence of the steps a), b), c) and d) is preferred. For example, the steps a) and b) or steps c) and d) can also being swapped.

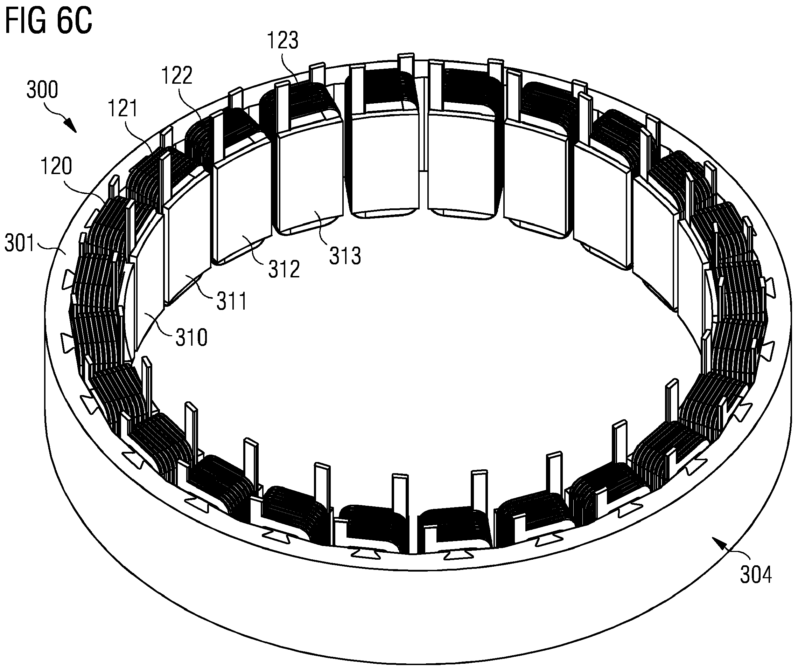

The notches 350-353 are shown in Fig. 8, in which a respective stator tooth 310-313 is slipped into the corresponding opening parallel to the stator axis 302. The final assembly is illustrated within Fig. 6b and Fig 6c. This configuration leads to a removeable connection between stator teeth 310-313 and the stator ring 301.

A final fixation between the notches 350-353 and the stator teeth 310-313 can be achieved for instance by screws or glue. This aspect is not shown in the figures.

Preferably at this embodiment, the stator ring 301 comprises an inner side 304, directed radially inwards, on which the multiplicity of stator teeth is arranged.

The invention is not restricted to the specific embodiments described in detail herein, but encompasses all variants, combinations and modifications thereof that fall within the framework of the appended claims.

For example, a stator according to the invention can comprise combinations with or without yoke segments or stator teeth on the inner side or on the outer side of the stator ring as well.

### List of reference numerals:

- 100, 200, 300: stator
- 101, 201, 301: stator ring
- 102, 202, 302: stator axis
- 103, 203, 303: outer side of the stator ring
- 104, 204, 304: inner side of the stator ring
- 110-113, 210-213, 310-313: stator tooth
- 114, 214, 314: tooth axis
- 115, 215, 315: tooth width
- 120-123: stator coil
- 124: coil axis
- 125: coil opening
- 126: coil height
- 127: coil width
- 128: coil length
- 130: rectangular wire
- 131: wire heigth
- 132: wire width
- 133: shorter side of wire
- 134: longer side of wire
- 140-143: yoke segment
- 350-353: notch

## Claims

**1.** Stator (100, 200, 300) for a permanent magnet synchronous motor, comprising
a multiplicity of stator teeth, wherein each stator tooth (110-113, 210-213, 310-313) of the multiplicity of stator teeth has a tooth axis (114, 214, 314), and
a stator ring (101, 201, 301) with a stator axis (102, 202, 302), wherein the multiplicity of stator teeth is arranged radially along the circumference of the stator ring (101, 201, 301), and the tooth axes (114, 214, 314) cross the stator axis (102, 202, 302) orthogonally within one plane, and
a multiplicity of stator coils, wherein each stator coil (120-123) of the multiplicity of stator coils has a coil axis (124) and a coil opening (125) and comprises windings made of a wire (130), which windings extend along the coil axis (124), and
the coil axis (124) of the respective stator coil (120-123) is arranged parallel to the tooth axis (114, 214, 314) of the respective stator tooth (110-113, 210-213, 310-313) and the coil opening (125) of the respective stator coil (120-123) surrounds the respective stator tooth (110-113, 210-213, 310-313),
**characterized in that** the wire (130) of the respective coil (120-123) has a rectangular cross section with a shorter side (133) and a longer side (134), and the shorter side (133) of the wire (130) of the respective coil (120-123) is orientated parallel to the coil axis (124) of the respective stator coil (120-123).

**2.** Stator (100, 200, 300) according to the preceding claim, wherein the respective stator tooth (110-113, 210-213, 310-313) has a tooth width (115, 215, 315), which is which is defined by the dimension of the cross section in the direction orthogonal to the tooth axis (114, 214, 314) and in a plane orthogonal to the stator axis (102, 202, 302), and the longer side (134) of the wire (130) is smaller than the half of the tooth width (115, 215, 315).

**3.** Stator (100, 200) according to one of the preceding claims, wherein the stator ring (101, 201) comprises an outer side (103, 203), directed radially outwards, on which the multiplicity of stator teeth is arranged.

**4.** Stator (100, 200) according to one of the preceding claims, comprising a multiplicity of yoke segments, wherein each yoke segment (140-143) of the multiplicity of yoke segments is configured to be mounted between two respective adjacent stator teeth (110-113, 210-213) to connect the two respective adjacent stator teeth (110-113, 210-213).

**6.** Stator (100) according to one of claims 1 to 4, wherein the multiplicity of stator teeth and the stator ring (101) constitute a one-piece part.

**5.** Stator (200) according to claim 4, wherein the multiplicity of yoke segments and the multiplicity of stator teeth constitute the stator ring (201).

**7.** Stator (300) according to claim 1 or 2, wherein the stator ring (301) comprises an inner side (304), directed radially inwards, on which the multiplicity of stator teeth is arranged.

**8.** Stator (300) according to claim 7, wherein the stator ring (301) comprises a multiplicity of notches, each notch (350-353) of the multiplicity of notches is configured to receive a mounting portion of the respective stator tooth (310-313).

**9.** Stator (300) according to claim 8, wherein each notch (350-353) has a longitudinal elongation, which is orientated parallel to the stator axis (202), and has laterally a v-shaped opening, which is configured to receive a complementary shaped mounting portion of the respective stator tooth (310-313).

**10.** Permanent magnet synchronous motor with a stator (100, 200, 300) according to one of the preceding claims.

**11.** Aircraft with an electric propulsion system comprising a permanent magnet synchronous motor according to the preceding claim.

**12.** Method for assembling a stator (100, 200, 300) for a permanent magnet synchronous motor according to claim 1 or 2, **characterized by** the steps of:
a) Providing a stator (100, 200, 300), comprising
a multiplicity of stator teeth, wherein each stator tooth (110-113, 210-213, 310-313) of the multiplicity of stator teeth has a tooth axis (114, 214, 314), and
a stator ring (101, 201, 301) with a stator axis (102, 202, 302), wherein the multiplicity of stator teeth is arranged radially along the circumference of the stator ring (101, 201, 301), and the tooth axes (114, 214, 314) cross the stator axis (102, 202, 302) orthogonally within one plane, and
b) Providing a multiplicity of stator coils separately from the multiplicity of stator teeth,
wherein each stator coil (120-123) of the multiplicity of stator coils has a coil axis (124) and a coil opening (125) and comprises windings made of a wire (130), which windings extend along the coil axis (124),
and the wire (130) of the respective coil (120-123) has a rectangular cross section with a shorter side (133) and a longer side (134), and the shorter side (133) of the wire (130) of the respective coil (120-123) is orientated parallel to the coil axis (124) of the respective stator coil (120-123),
c) Placing each stator coil on the respective stator tooth (110-113, 210-213, 310-313), wherein the coil axis (124) of the respective stator coil (120-123) is arranged parallel to the tooth axis (114, 214, 314) of the respective stator tooth (110-113, 210-213, 310-313) and the coil opening (125) of the respective stator coil (120-123) surrounds the respective stator tooth (110-113, 210-213, 310-313),
d) Assembling the multiplicity of stator teeth, each carrying a respective stator coil (120-123), together with the stator ring (101, 201, 301), if applicable.

**13.** Method for assembling a stator (100, 200, 300) according to claim 12, wherein an insulation layer is provided at least partially on the surface the wire (130) of the respective coil (120-123) between step b) and c).

**14.** Method for assembling a stator (100, 200) according to claim 12 or 13, wherein the method comprises further steps of:
e1) Providing a multiplicity of yoke segments, wherein each yoke segment (140-143) of the multiplicity of yoke segments is configured to be mounted between two respective adjacent stator teeth (110-113, 210-213) to connect the two respective adjacent stator teeth (110-113, 210-213),
f1) Mounting the yoke segments (140-143) between two respective adjacent stator teeth (110-113, 210-213).

**15.** Method for assembling a stator (100) according to claim 14, wherein the stator ring (101) comprises an outer side (103), directed radially outwards, on which the multiplicity of stator teeth is arranged.

**16.** Method for assembling a stator (300) according to claim 12 or 13, wherein the stator ring (301) comprises a multiplicity of notches (350-353), each configured to receive a respective stator tooth (310-313), and
preferably each of the multiplicity of notches (350-353) has a longitudinal elongation, which is orientated parallel to the stator axis (302), and has laterally a v-shaped opening, which is configured to receive a complementary shaped mounting portion of the respective stator tooth (310-313),
wherein after step d) the method comprises further the step of:
e2) Slide the stator tooth (310-313) with the stator coil into the notches (350-353).

**17.** Method for assembling a stator (300) according to claim 16, wherein the stator ring (301) comprises an inner side (304), directed radially inwards, on which the multiplicity of stator teeth is arranged.
